# EUROPÄISCHE PATENTSCHRIFT

(11) **EP 0 880 112 B1**
(45) Veröffentlichungstag und Bekanntmachung des Hinweises auf die Patenterteilung: **02.10.2002**
(21) Anmeldenummer: 98109120.0
(22) Anmeldetag: 19.05.1998
(51) Int. Cl.: G07D 7/00, G07D 7/12, G03H 1/04

(54) **Verfahren zur Echtheitsprüfung eines Hologramms und Lesegerät zur Durchführung des Verfahrens**
Method for validation of a hologram and reader for carrying out this method
Méthode pour la validation d'un hologramme et lecteur pour la mise en oeuvre de ce méthode

(30) Priorität: 22.05.1997 DE 19721525
(43) Veröffentlichungstag der Anmeldung: 25.11.1998
(73) Patentinhaber: HSM Holographic Systems München GmbH, 85652 Ottersberg (DE)
(72) Erfinder: Dausmann, Günther, 85435 Erding (DE); Yang, Zishao, Dr., 85435 Erding (DE)
(74) Vertreter: Zinnecker, Armin, Dipl.-Ing.

(56) Entgegenhaltungen:
- DE-A- 19 541 071
- US-A- 4 565 426
- US-A- 5 101 184
- US-A- 5 515 183
- PATENT ABSTRACTS OF JAPAN vol. 008, no. 215 (P-305), 2. Oktober 1984 (1984-10-02) & JP 59 099475 A (DAINIPPON INSATSU KK), 8. Juni 1984 (1984-06-08)

## Beschreibung

Die vorliegende Erfindung betrifft ein Verfahren zur Echtheitsprüfung eines Hologramms und ein Lesegerät zur Durchführung des Verfahrens.

Hologramme werden insbesondere in Form von Prägehologrammen zunehmend auf Ausweispapieren und zur Sicherung der Echtheit auf Markenartikeln verwendet. Es ist hierbei wünschenswert, die Echtheit eines Hologramms maschinell prüfen zu können.

Aus der DE 195 41 071 ist ein Verfahren bekannt, bei dem die Echtheit eines zu prüfenden Hologramms mittels eines Lesehologramms bestimmt wird. Hierbei wird durch Beleuchtung des zu prüfenden Hologramms mit einem Rekonstruktionsstrahl eine Wellenfront rekonstruiert, mit welcher das Lesehologramm beleuchtet wird. Hierdurch entsteht am Lesehologramm eine Korrelationswellenfront. Die Intensität dieser Korrelationswellenfront ist in starkem Maße abhängig von Positionstoleranzen zwischen zu prüfendem Hologramm und Lesehologramm. Daher wird die Intensität der Korrelationswellenfront in Abhängigkeit von einer relativen Verschiebung zwischen zu prüfendem Hologramm und Lesehologramm ermittelt. Im Falle der Echtheit des zu prüfenden Hologramms erhält man hierbei einen Intensitätspeak der Korrefationswellenfront, der um einen bestimmten Faktor größer ist als die übrigen gemessenen Intensitäten.

Die Intensität der am zu prüfenden Hologramm entstehenden Wellenfront, und damit der Korrelationswellenfront, ist jedoch in starkem Maße abhängig von der Ebenmäßigkeit des Substrats, auf dem das zu prüfende Hologramm aufgebracht ist. Ist beispielsweise das zu prüfende Hologramm auf einem Papiersubstrat aufgebracht, können sich die Unebenheiten des Papiers derart auswirken, daß der Korrelationspeak beim oben beschriebenen Verfahren nicht mehr festgestellt werden kann. Dies ist insbesondere dann der Fall, wenn als zu prüfendes Hologramm ein Hologramm eines zufällig strukturierten optischen Elements, beispielsweise einer Mattscheibe oder eines Diffusors verwendet wird.

Aufgabe der Erfindung ist daher, die Angabe eines Verfahrens durch das in einfacher Weise auch die Echtheit von Hologrammen bestimmt werden kann, welche auf einem ungleichmäßigen bzw. unebenen Substrat aufgebracht sind.

Diese Aufgabe wird gelöst durch Verfahren mit den Merkmalen der Patentansprüche 1 bzw. 2 und ein Lesegerät mit den Merkmalen des Patentanspruchs 8.

Die Erfindung nutzt aus, daß bei Bestrahlung eines zu prüfenden Hologramms die durch die Hologrammstruktur bedingte Beugung im wesentlichen in die erste Beugungsordnung gebeugt wird. In Richtung der ersten Beugungsordnung wird jedoch auch an Unebenheiten des Substrats reflektierte Strahlung gestreut. Dies führt zu einer Beeinträchtigung des Hologrammsignals bzw. der Hologramminformation in der ersten Beugungsordnung. Gleichzeitig wird der Großteil dieser durch Unebenheiten des Substrats verursachten Streustrahlung in Richtung der nullten Beugungsordnung der Hologrammstruktur reflektiert bzw. gestreut. Ferner sind die Unebenheitsstrukturen wesentlich gröber als die feinen Hologrammstrukturen, so daß das von den Unebenheiten verursachte "Streustrahlungsbild" wesentlich kleinere Ortsfrequenzen als das Bild des Hologramms aufweist.

Durch eine rechnergesteuerte Korrelation der in die jeweiligen Beugungsordnungen gestreuten Strahlung ist es erfindungsgemäß möglich, die eigentliche Hologramminformation aus der in Richtung der ersten Beugungsordnung des Hologramms gebeugten Strahlung zu isolieren, bzw. die durch Unregelmäßigkeiten der Substratoberfläche verursachte Streustrahlung zu eliminieren.

Die Erfindung schlägt zwei Verfahren zur rechnerischen Korrelation der in die erste bzw. nullte Beugungsordnung gebeugten Strahlung vor. Bei einem bevorzugten Verfahren wird die in die erste bzw. nullte Beugungsordnung des Hologramms gebeugte bzw. gestreute Strahlung jeweils mit Referenzstrahlen zur Interferenz gebracht. Die so entstehenden Interferenzmuster werden für verschiedene Phasenbeziehungen zwischen Rekonstruktionsstrahl und Referenzstrahlen miteinander korreliert. Schließlich werden die so erhaltenen Korrelations-Intensitätsverteilungen der jeweiligen Beugungsordnungen miteinander korreliert, insbesondere pixelweise voneinander subtrahiert.

Es ist jedoch auch möglich, digitale Speckle-Korrelationsverfahren anzuwenden. Hierzu werden für jede Beugungsordnung wenigstens zwei Speckle-Intensitätsverteilungen aufgenommen und miteinander korreliert. Die jeweiligen Speckle-Intensitätsverteilungen einer Beugungsordnung unterscheiden sich hierbei beispielsweise durch die Phasenbeziehung zwischen Rekonstruktionsstrahl und zu prüfendem Hologramm. Diese Phasenbeziehung läßt sich durch entsprechende Verschiebung relativ zum Rekonstruktionsstrahl des Hologramms in einfacher Weise verändern. Die für die jeweiligen Beugungsordnungen ermittelten Korrelations-Speckle-Intensitätsverteilungen können ebenfalls pixelweise voneinander subtrahiert werden.

Mit den erfindungsgemäßen Verfahren und dem Lesegerät ist es nun möglich, die Echtheit von Hologrammen, welche auch auf Substraten mit unebener Oberfläche aufgebracht sind, in einfacher Weise zu bestimmen.

Vorteilhafte Weiterbildungen der Erfindung sind Gegenstand der Unteransprüche.

Nach einer bevorzugten Ausgestaltung der Erfindung ist das zu prüfende Hologramm ein Hologramm eines zufällig strukturierten optischen Elements. Hologramme dieser Art finden in der Sicherheitstechnik weite Anwendung, da sie nur sehr schwer nachzuahmen sind. Mit dem erfindungsgemäßen Verfahren ist es nun möglich, auch derartige Hologramme in einfacher Weise maschinell bezüglich ihrer Echtheit zu überprüfen.

Zweckmäßigerweise ist das zu prüfende Hologramm die Kopie eines Masterhologramms. Derartige Hologramme sind in einfacher Weise beispielsweise durch Einprägen der Reliefstruktur des Masterhologramms in ein geeignetes Substrat herstellbar. Mit dem erfindungsgemäßen Verfahren sind nun derartige Prägehologramme, die in ein Substrat mit unregelmäßiger Oberfläche eingeprägt sind, in einfacher Weise maschinell lesbar. Als besonders vorteilhaft erweist sich das erfindungsgemäße Verfahren beim maschinellen Lesen von in Papier oder Pappe eingeprägten Hologrammen.

Zweckmäßigerweise werden der Beugungsstrahl erster Ordnung und der Beugungsstrahl nullter Ordnung mittels eines Teleskopsystems oder einer Aufweitungsoptik aufgeweitet. Hierdurch ist es möglich, kleinere Bereiche eines zu prüfenden Hologramms auf großflächigere CCD-Targets abzubilden. Hierdurch können CCD-Targets, welche ein relativ geringes Auflösungsvermögen aufweisen, in wirksamer Weise als Sensorelemente für relativ fein auflösende Hologramminformationsstrukturen verwendet werden.

Zweckmäßigerweise werden der erste und der zweite Referenzstrahl sowie der Rekonstruktionsstrahl mittels wenigstens eines Strahlteilers von einem Laserstrahl abgeleitet. Hierdurch vereinfacht sich der rechnerische Aufwand zur Korrelierung der in die verschiedenen Beugungsordnungen gestreuten Informationen.

Es ist bevorzugt, die Referenzstrahlen und die diesen zugeordneten Beugungsstrahlen mittels Prismen und/oder halbdurchlässiger Spiegel zur Interferenz zu bringen. Hierdurch ist es möglich, die Referenzstrahlen und Beugungsstrahlen unter einem relativ kleinen Winkel zur Interferenz zu bringen, wodurch die maximal auftretenden Ortsfrequenzen relativ klein gehalten werden können. Derartige Prismen oder Spiegel sind gleichzeitig in einfacher Weise schwenkbar bzw. positionierbar, so daß die jeweiligen Winkel zwischen Referenz- und Beugungsstrahlen justierbar sind. Hierdurch können die auftretenden Ortsfrequenzen optimal an das Auflösungsvermögen der verwendeten CCD-Elemente angepaßt werden. Prismen oder Spiegel sind auch vorteilhafterweise als Strahlteiler beispielsweise zur Teilung eines verwendeten Laserstrahls verwendbar.

Nach einer vorteilhaften Ausgestaltung des Lesegeräts weist die Abbildungsoptik eine strahlaufweitende Optik auf. Hierdurch ist es möglich, CCD-Elemente, welche eine relativ geringe Auflösung besitzen, als lichtempfindliche Elemente zu verwenden.

Zweckmäßigerweise weist die Vorrichtung Prismen und/oder halbdurchlässige Spiegel auf, mittels derer die Beugungsstrahlen mit den entsprechenden Referenzstrahlen zur Interferenz bringbar sind. Derartige Combiner sind in einfacher Weise verschwenkbar bzw. positionierbar, so daß eine Feinjustierung der Abbildungsoptik möglich ist.

Zweckmäßigerweise sind das zu prüfende Hologramm und/oder die lichtempfindlichen Elemente in dem Lesegerät positionierbar gelagert und mit einem Positionierantrieb versehen. Hierdurch ist in einfacher Weise eine Feinjustierung bzw. Orientierung des zu prüfenden Hologramms bezüglich der lichtempfindlichen Elemente durchführbar.

Das Lesegerät weist vorteilhafterweise einen Piezospiegel zur Veränderung der Phasenrelation zwischen Rekonstruktionsstrahl und Referenzstrahlen auf.

Vorteilhafterweise weist das Lesegerät einen Laser auf, der zur Erzeugung des Rekonstruktionsstrahls und der Referenzstrahlen dient.

Ein Ausführungsbeispiel der Erfindung wird nun anhand der Zeichnung näher erläutert. In dieser zeigt
- Fig. 1: schematisch eine Anordnung zur Erzeugung von Rekonstruktionsstrahl und Referenzstrahlen durch Teilung eines Laserstrahls, und

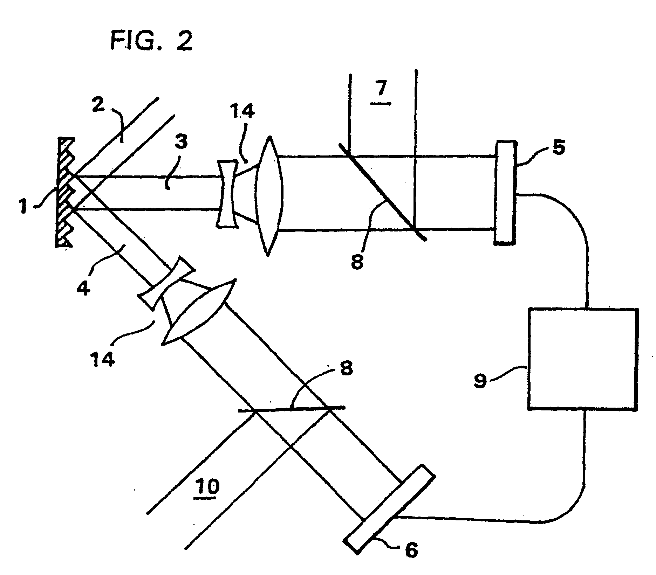

- Fig. 2: schematisch eine Ausführungsform einer Abbildungsoptik zur Durchführung des erfindungsgemäßen Verfahrens.

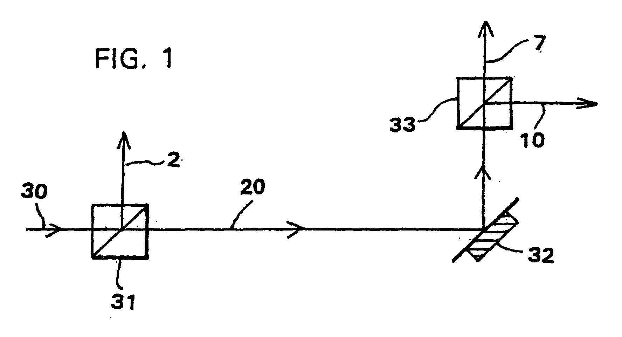

Ein Laserstrahl 30 wird mittels eines ersten Strahlteilers 31 in einen Rekonstruktionsstrahl 2 und einen weiteren Strahl 20 geteilt (Fig. 1). Der Strahl 20 wird über einen Piezospiegel 32 einem zweiten Strahlteiler 33 zugeführt, durch welchen Referenzstrahlen 7, 10 erzeugt werden.

Durch Piezoverschiebung des Piezospiegels 32 kann die Phase der Referenzstrahlen 7, 10 gegenüber der Phase des Rekonstruktionsstrahls 2 verschoben werden, wobei die Phase der Referenzstrahlen 7, 10 untereinander gleich bleibt.

Es werden nun auf den CCD-Targets 5, 6 erste Bilder bzw. Intensitätsverteilungen aufgenommen. Hierzu wird ein zu prüfendes Hologramm 1 vom Rekonstruktionsstrahl 2 beleuchtet. Durch Interaktion des Rekonstruktionsstrahls mit der Hologrammstruktur entstehen ein Beugungsstrahl erster Ordnung (mit Bezugszeichen 3) bezeichnet) und ein Beugungsstrahl nullter Ordnung (mit Bezugszeichen 4 bezeichnet). Die Beugungsstrahlen 3, 4 werden jeweils mittels eines teleskopischen Linsensystems 14 auf eine gewünschte Größe aufgeweitet. Die dargestellten teleskopischen Linsensysteme 14 weisen jeweils eine Zerstreuungslinse und eine Sammellinse auf. Es sind selbstverständlich auch andere teleskopische Linsensysteme, beispielsweise zwei Sammellinsen aufweisende Systeme, verwendbar.

Nach Aufweitung trifft der Beugungsstrahl erster Ordnung auf das CCD-Target 5, und der Beugungsstrahl nullter Ordnung auf das CCD-Target 6. Auf den CCD-Targets 5, 6 werden die Beugungsstrahlen erster und nullter Ordnung mit dem ersten Referenzstrahl 7 bzw. dem zweiten Referenzstrahl 10 zur Interferenz gebracht. Zu diesem Zwecke sind in den Strahlungsgängen der jeweiligen Beugungsstrahlen Strahlcombiner, insbesondere Prismen oder halbdurchlässige Spiegel 8 vorgesehen. Hierdurch ist es möglich, den Winkel zwischen den Achsen der jeweiligen Beugungsstrahlen und den Achsen der zugeordneten Referenzstrahlen relativ klein auszubilden, wodurch die auf den CCD-Targets maximal auftretenden Ortsfrequenzen der Interferenzmuster beschränkt werden können. Es ist ebenfalls möglich, die Beugungsstrahlen mit den Referenzstrahlen ohne derartige Strahlteiler bzw. Combiner zur Interferenz zu bringen.

Mittels der CCD-Targets 5, 6 können die Intensitätsverteilungen der derart erzeugten ersten Bilder bzw. Interferenzmuster aufgenommen und über einen A/D-Wandler (nicht dargestellt) an einen Rechner 9 übertragen werden.

Es werden nun in gleicher Weise zweite Bilder bzw. Interferenzmuster auf den CCD-Targets 5, 6 aufgenommen. Hierbei werden jedoch die Phasen der Referenzstrahlen 7, 10 mittels des Piezospiegels 32 gegenüber der Phase des Rekonstruktionsstrahls 2 verschoben.

Die an den jeweiligen CCD-Targets gemessenen, phasenverschobenen Interferenzmuster bzw. Bilder werden nun rechnerisch miteinander korreliert. Die derart für die erste Beugungsordnung und die nullte Beugungsordnung erhaltenen Daten können nun, insbesondere pixelweise, voneinander subtrahiert werden. Hierdurch kann in zuverlässiger Weise eine Hologramminformation, welche in die erste Beugungsordnung gebeugt wird, von Hintergrundeffekten, wie beispielsweise der durch die Unebenheit des Substrats verursachen Strahlung, isoliert werden. Es ist dann in einfacher Weise möglich, die für das zu prüfende Hologramm erhaltene Information beispielsweise mit entsprechenden Informationen des Masterhologramms oder einer als echt bekannten Kopie des Masterhologramms zu vergleichen.

Es sei ferner bemerkt, daß zur Steigerung der Sensibilität des Verfahrens auch mehr als zwei "phasenverschobene" Aufnahmen des zu prüfenden Hologramms gemacht werden können. Besonders bevorzugt sind hierbei Verfahren mit 3 oder 4 verschiedenen Aufnahmen, bei denen der Rechenaufwand zur rechnerischen Korrelierung der phasenverschobenen Interferenzmuster in relativ unaufwendiger Weise durchführbar ist.

Es sei darauf hingewiesen, daß durch Gangunterschiede des Beugungsstrahls nullter Ordnung hervorgerufene Effekte ebenfalls rechnerisch eliminiert werden können.

Es ist ferner möglich, das rechnerisch ermittelte modifizierte Interferenzmuster optisch darzustellen, so daß ein Betrachter dieses Interferenzmuster mit einem entsprechend optisch dargestellten Interferenzmuster eines als echt bekannten Hologramms vergleichen kann.

## Patentansprüche

1. Verfahren zur Echtheitsbestimmung eines Hologramms, bei dem
das zu prüfende Hologramm (1) mit einem Rekonstruktionsstrahl (2) beleuchtet wird,
**gekennzeichnet durch** folgende Schritte:
a) der Beugungsstrahl (3) erster Ordnung des am Hologramm entstehenden Wellenfeldes wird auf ein erstes lichtempfindliches Element, insbesondere ein CCD-Target (5), abgebildet und mit einem ersten Referenzstrahl (7) zur Interferenz gebracht,
b) der Beugungsstrahl (4) nullter Ordnung des am Hologramm (1) entstehenden Wellenfeldes wird auf ein zweites lichtempfindliches Element, insbesondere ein CCD-Target (6), abgebildet und mit einem zweiten Referenzstrahl (10) zur Interferenz gebracht,
c) die an den jeweiligen lichtempfindlichen Elementen (5, 6) entstehenden Intensitätsverteilungen werden für wenigstens zwei Phasenrelationen zwischen dem Rekonstruktionsstrahl (2) und den jeweiligen Referenzstrahlen (7, 10) zum Erhalt eine Korrelations-Intensitätsverteilung für die jeweiligen Beugungsordnungen miteinander korreliert, und
d) die für die jeweiligen Beugungsordnungen ermittelten Korrelations-Intensitätsverteilungen werden miteinander korreliert, insbesondere pixelweise voneinander subtrahiert.

2. Verfahren zur Echtheitsbestimmung eines Hologramms, bei dem
das zu prüfende Hologramm (1) mit einem Rekonstruktionsstrahl (2) beleuchtet wird,
**gekennzeichnet durch** folgende Schritte:
a) der Beugungsstrahl (3) erster Ordnung des am Hologramm entstehenden Wellenfeldes wird auf ein erstes lichtempfindliches Element, insbesondere ein CCD-Target (5) abgebildet,
b) der Beugungsstrahl (4) nullter Ordnung des am Hologramm entstehenden Wellenfeldes wird auf ein zweites lichtempfindliches Element, insbesondere ein CCD-Target (6) abgebildet,
c) die auf die lichtempfindlichen Elemente abgebildeten Speckle-Intensitätsverteilungen der Beugungsstrahlen erster und nullter Ordnung werden jeweils für wenigstens zwei Phasenzustände das Rekonstruktionsstrahls ermittelt und zum Erhalt einer Korrelations-Speckle-Intensitätsverteilung für die jeweilige Beugungsordnung miteinander korreliert,
d) die für die jeweilige Beugungsordnung ermittelten Korrelations-Speckle-Intensitätsverteilungen werden miteinander korreliert, insbesondere pixelweise voneinander subtrahiert.

3. Verfahren nach Anspruch 1 oder 2, **dadurch gekennzeichnet, daß** als zu prüfendes Hologramm ein Hologramm eines zufällig strukturierten optischen Elements verwendet wird.

4. Verfahren nach einem der vorstehenden Ansprüche, **dadurch gekennzeichnet, daß** das zu prüfende Hologramm die Kopie eines Masterhologramms ist.

5. Verfahren nach einem der vorstehenden Ansprüche, **dadurch gekennzeichnet, daß** die Beugungsstrahlen (3, 4) erster und nullter Ordnung mittels eines Teleskopsystems oder einer Aufweitungsoptik (14) optisch aufgeweitet werden.

6. Verfahren nach einem der vorstehenden Ansprüche 1 oder 3 bis 5, **dadurch gekennzeichnet, daß** der erste und der zweite Referenzstrahl (7, 10) sowie der Rekonstruktionsstrahl (2) mittels wenigstens eines Strahlteilers aus einem Laserstrahl abgeleitet werden.

7. Verfahren nach einem der vorstehenden Ansprüche 1 oder 3 bis 6, **dadurch gekennzeichnet, daß** die Referenzstrahlen (7, 10) jeweils mittels Prismen und/oder halbdurchlässiger Spiegel (8) mit den jeweiligen Beugungsstrahlen zur Interferenz gebracht werden.

8. Lesegerät zum Prüfen von Hologrammen, mit
einer Vorrichtung (30) zur Erzeugung eines Rekonstruktionsstrahls (2) zur Beleuchtung eines zu prüfenden Hologramms (1),
**gekennzeichnet durch**
eine Abbildungsoptik (14, 8) zur Abbildung der Beugungsstrahlen (3, 4) erster und nullter Ordnung des am Hologramm (1) entstehenden Wellenfeldes auf erste und zweite lichtempfindliche Elemente, insbesondere CCD-Targets (5, 6),
eine Vorrichtung (30) zur Erzeugung erster und zweiter Referenzstrahlen (7, 10) welche mittels einer Abbildungsoptik mit den Beugungsstrahlen (3, 4) zur Interferenz bringbar sind,
Mittel (32) zur Veränderung der Phasenrelation zwischen Rekonstruktionsstrahl (2) und den jeweiligen Referenzstrahlen (7, 10), und
Mittel zur rechnerischen Korrelierung der an den lichtempfindlichen Elementen (5, 6) ermittelten Interferenzmusterintensitäten.

9. Lesegerät nach Anspruch 8, **dadurch gekennzeichnet, daß** die Abbildungsoptik eine strahlaufweitende Optik (14) aufweist.

10. Lesegerät nach Anspruch 8 oder 9, **dadurch gekennzeichnet, daß** die Abbildungsoptik Prismen und/oder halbdurchlässige Spiegel (8) aufweist, mittels derer die Beugungsstrahlen mit den entsprechenden Referenzstrahlen zur Interferenz bringbar sind.

11. Lesegerät nach einem der Ansprüche 8 bis 10, **dadurch gekennzeichnet, daß** das zu prüfende Hologramm (1) und/oder die lichtempfindlichen Elemente (5, 6) positionierbar gelagert und mit einem Positionierantrieb versehen sind.

12. Lesegerät nach einem der Ansprüche 8 bis 11, **gekennzeichnet durch** wenigstens einen Piezospiegel (32), mittels dessen die Phasenrelation zwischen dem Rekonstruktionsstrahl (2) und den Referenzstrahlen (7, 10) veränderbar ist.

13. Lesegerät nach einem der Ansprüche 8 bis 12, **dadurch gekennzeichnet, daß** ein einziger Laser (30) zur Erzeugung des Rekonstruktionsstrahls (2) und der Referenzstrahlen (7, 10) dient.

## Claims

1. Method for determining the authenticity of a hologram, in which
the hologram (1) to be checked is illuminated with a reconstruction beam (2),
**characterized by** the following steps:
a) the first-order diffraction beam (3) of the wave field produced at the hologram is imaged onto a first light-sensitive element, in particular a CCD target (5), and brought into interference with a first reference beam (7),
b) the zeroth-order diffraction beam (4) of the wave field produced at the hologram (1) is imaged onto a second light-sensitive element, in particular a CCD target (6), and brought into interference with a second reference beam (10),
c) the intensity distributions produced at the respective light-sensitive elements (5, 6) are correlated with one another for at least two phase relations between the reconstruction beam (2) and the respective reference beams (7, 10) in order to obtain a correlation intensity distribution for the respective diffraction orders, and
d) the correlation intensity distributions determined for the respective diffraction orders are correlated with one another, in particular subtracted from one another pixel by pixel.

2. Method for determining the authenticity of a hologram, in which
the hologram (1) to be checked is illuminated with a reconstruction beam (2),
**characterized by** the following steps:
a) the first-order diffraction beam (3) of the wave field produced at the hologram is imaged onto a first light-sensitive element, in particular a CCD target (5),
b) the zeroth-order diffraction beam (4) of the wave field produced at the hologram is imaged onto a second light-sensitive element, in particular a CCD target (6),
c) the speckle intensity distributions - imaged onto the light-sensitive elements - of the first- and zeroth-order diffraction beams are in each case determined for at least two phase states of the reconstruction beam and are correlated with one another in order to obtain a correlation speckle intensity distribution for the respective diffraction order,
d) the correlation speckle intensity distributions determined for the respective diffraction order are correlated with one another, in particular subtracted from one another pixel by pixel.

3. Method according to Claim 1 or 2, **characterized in that** a hologram of a randomly structured optical element is used as the hologram to be checked.

4. Method according to one of the preceding claims, **characterized in that** the hologram to be checked is the copy of a master hologram.

5. Method according to one of the preceding claims, **characterized in that** the first- and zeroth-order diffraction beams (3, 4) are optically expanded by means of a telescope system or an expansion optical arrangement (14).

6. Method according to one of the preceding claims 1 or 3 to 5, **characterized in that** the first and second reference beams (7, 10) and also the reconstruction beam (2) are derived from a laser beam by means of at least one beam splitter.

7. Method according to one of the preceding claims 1 or 3 to 6, **characterized in that** the reference beams (7, 10) are brought into interference with the respective diffraction beams in each case by means of prisms and/or semitransparent mirrors (8).

8. Reader for checking holograms, having a device (30) for generating a reconstruction beam (2) for illuminating a hologram (1) to be checked,
**characterized by**
an imaging optical arrangement (14, 8) for imaging the first- and zeroth-order diffraction beams (3, 4) of the wave field produced at the hologram (1) onto first and second light-sensitive elements, in particular CCD targets (5, 6),
a device (30) for generating first and second reference beams (7, 10) which can be brought into interference with the diffraction beams (3, 4) by means of an imaging optical arrangement,
means (32) for altering the phase relation between reconstruction beam (2) and the respective reference beams (7, 10), and
means for the computational correlation of the interference pattern intensities determined at the light-sensitive elements (5, 6).

9. Reader according to Claim 8, **characterized in that** the imaging optical arrangement has a beam-expanding optical arrangement (14).

10. Reader according to Claim 8 or 9, **characterized in that** the imaging optical arrangement has prisms and/or semitransparent mirrors (8), by means of which the diffraction beams can be brought into interference with the corresponding reference beams.

11. Reader according to one of Claims 8 to 10, **characterized in that** the hologram (1) to be checked and/or the light-sensitive elements (5, 6) are mounted in a positionable manner and are provided with a positioning drive.

12. Reader according to one of Claims 8 to 11, **characterized by** at least one piezomirror (32), by means of which the phase relation between the reconstruction beam (2) and the reference beams (7, 10) can be altered.

13. Reader according to one of Claims 8 to 12, **characterized in that** a single laser (30) serves for generating the reconstruction beam (2) and the reference beams (7, 10).

## Revendications

1. Procédé pour la validation d'un hologramme, où le hologramme à examiner (1) est éclairé avec un rayon de reconstruction (2),
**caractérisé par** les étapes suivantes :
a) le rayon de diffraction (3) du premier ordre du champ d'ondes produit à l'hologramme est représenté sur un premier élément sensible à la lumière, notamment une cible CCD (5) et est amené en interférence avec un premier rayon de référence (7),
b) le rayon de diffraction (4) d'ordre zéro du champ d'ondes produit à l'hologramme (1) est représenté sur un second élément sensible à la lumière, en particulier une cible CCD (6) et est amené en interférence avec un second rayon de référence (10),
c) les répartitions d'intensité produites aux éléments respectifs sensibles à la lumière (5, 6) pour au moins deux relations de phases entre le rayon de reconstruction (2) et les rayons de référence respectifs (7, 10) sont mises en corrélation pour l'obtention d'une répartition d'intensité de corrélation pour les ordres de diffraction respectifs et
d) les répartitions d'intensité de corrélation déterminées pour les ordres de diffraction respectifs sont mises en corrélation, notamment sont soustraites l'une de l'autre par éléments d'image.

2. Procédé pour la validation d'un hologramme, où
le hologramme à examiner (1) est éclairé avec un rayon de reconstruction (2),
**caractérisé par** les étapes suivantes :
a) le rayon de diffraction (3) du premier ordre du champ d'ondes produit à l'hologramme est représenté sur un premier élément sensible à la lumière, notamment une cible CCD (5),
b) le rayon de diffraction (4) d'ordre zéro du champ d'ondes produit à l'hologramme est représenté sur un second élément sensible à la lumière, notamment une cible CCD (6),
c) les répartitions d'intensité tachetées représentées sur les éléments sensibles à la lumière des rayons de diffraction de premier ordre et d'ordre zéro sont déterminées respectivement pour au moins deux états de phase du rayon de reconstruction et sont mises en corrélation entre elles pour obtenir une répartition d'intensité tachetée de corrélation pour l'ordre de diffraction respectif,
d) les répartitions d'intensité tachetées de corrélation déterminées pour l'ordre de diffraction respectif sont mises en corrélation entre elles, sont notamment soustraites l'une de l'autre par éléments d'image.

3. Procédé selon la revendication 1 ou 2, **caractérisé en ce qu'**on utilise comme hologramme à examiner un hologramme d'un élément optique à structure aléatoire.

4. Procédé selon l'une des revendications précédentes, **caractérisé en ce que** l'hologramme à examiner est la copie d'un hologramme maître.

5. Procédé selon l'une des revendications précédentes, **caractérisé en ce que** les rayons de diffraction (3, 4) du premier ordre et d'ordre zéro sont élargis optiquement au moyen d'un système à télescope ou d'une optique d'élargissement (14).

6. Procédé selon l'une des revendications 1 ou 3 à 5, **caractérisé en ce que** le premier et le second rayon de référence (7, 10) ainsi que le rayon de reconstruction (2) sont dérivés au moyen d'au moins un diviseur de rayon d'un rayon laser.

7. Procédé selon l'une des revendications 1 ou 3 à 6, **caractérisé en ce que** les rayons de référence (7, 10) sont amenés en interférence respectivement au moyen de prismes et/ou de miroirs semi-perméables (8) avec les rayons de diffraction respectifs.

8. Lecteur pour examiner des hologrammes, avec
un dispositif (30) pour produire un rayon de reconstruction (2) pour éclairer un hologramme à examiner (1),
**caractérisé par**
une optique de représentation (14, 8) pour représenter les rayons de diffraction (3, 4) de premier ordre et d'ordre zéro du champ d'ondes produit à l'hologramme (1) sur des premier et second éléments sensibles à la lumière, notamment des cibles CCD (5, 6),
un dispositif (30) pour produire des premier et second rayons de référence (7, 10) qui peuvent être amenés en interférence au moyen d'une optique de représentation avec les rayons de diffraction (3, 4),
des moyens (32) pour modifier la relation des phases entre le rayon de reconstruction (2) et les rayons de référence respectifs (7, 10) et
des moyens pour la mise en corrélation par calcul des intensités de modèle d'interférence déterminées aux éléments (5, 6) sensibles à la lumière.

9. Appareil de lecture selon la revendication 8, **caractérisé en ce que** l'optique de représentation présente une optique (14) élargissant les rayons.

10. Appareil de lecture selon la revendication 8 ou 9, **caractérisé en ce que** l'optique de représentation présente des prismes et/ou des miroirs semi-transparents (8) au moyen desquels les rayons de diffraction peuvent être amenés en interférence avec les rayons de référence correspondants.

11. Appareil de lecture selon l'une des revendications 8 à 10, **caractérisé en ce que** l'hologramme à examiner (1) et/ou les éléments (5, 6) sensibles à la lumière sont logés de façon à pouvoir être positionnés et sont pourvus d'une commande de positionnement.

12. Appareil de lecture selon l'une des revendications 8 à 11, **caractérisé par** au moins un piézo-miroir (32) au moyen duquel peut être modifiée la relation des phases entre le rayon de reconstruction (2) et les rayons de référence (7, 10).

13. Appareil de lecture selon l'une des revendications 8 à 12, **caractérisé en ce qu'**un seul laser (30) sert à produire le rayon de reconstruction (2) et les rayons de référence (7, 10).
